# EUROPEAN PATENT APPLICATION

(11) **EP 4 790 791 A1**
(43) Date of publication of application: **12.08.2026**
(21) Application number: 25801499.2
(22) Date of filing: 19.06.2025
(51) Int. Cl.: H01M 10/54

(54) **METHOD FOR RECOVERING VALUABLE METALS FROM LITHIUM-BATTERY BLACK POWDER**

(30) Priority: 03.12.2024 CN 202411755308
(71) Applicant: Suzhou Botree Cycling Sci & Tech Co., Ltd, Suzhou, Jiangsu 215128 (CN)
(72) Inventor: LIU, Chunwei, Suzhou, Jiangsu 215128 (CN); YAO, Shaojie, Suzhou, Jiangsu 215128 (CN); WANG, Xue, Suzhou, Jiangsu 215128 (CN); LIN, Xiao, Suzhou, Jiangsu 215128 (CN)
(74) Representative: Murgitroyd & Company
(86) International application number: PCT/CN2025/101912
(87) International publication number: WO 2026/118415

(57) **Abstract**

The present application relates to the technical field of lithium batteries and discloses a method for recovering valuable metals from lithium battery black mass. Lithium battery black mass is mixed with a sulfur-containing substance and an inhibitor, followed by roasting, water leaching, and filtering to obtain a first filtrate and a first filter residue; a lithium salt is prepared from the first filtrate, and other valuable metals are recovered from the first filter residue; wherein the inhibitor is at least one selected from the group consisting of magnesium oxide, magnesium hydroxide, calcium oxide, calcium hydroxide, aluminum oxide, and aluminum hydroxide. The method provided by the present application enables the recovery of valuable metals from various types of lithium battery black mass, ensuring a high lithium recovery rate (≥98%) while allowing more other valuable metals to remain in the residue phase (with a loss rate <2%) for subsequent recovery, thereby improving the recovery rates of the other valuable metals.

## Description

### CROSS-REFERENCE

This application claims priority to Chinese Patent Application No. 202411755308.7, filed on December 03, 2024, entitled "METHOD FOR RECOVERING VALUABLE METALS FROM LITHIUM BATTERY BLACK MASS", filed with China National Intellectual Property Administration (CNIPA), the entire contents of which are incorporated herein by reference.

### Technical Field

The present application relates to the technical field of lithium batteries, and specifically relates to a method for recovering valuable metals from lithium battery black mass.

### Background Art

With the rapid development of fields such as electric vehicles and energy storage systems, higher requirements are imposed on the energy density, cycle life, and safety performance of lithium batteries. As a key component of lithium batteries, cathode material significantly affects the performance of lithium batteries.

Recycling lithium batteries has dual benefits of metal resources conservation and environment protection. In traditional hydrometallurgical processes, all valuable metals are leached out, followed by impurity removal and precipitation of nickel, cobalt, and manganese, with lithium recovered last. During the precipitation of nickel, cobalt, and manganese, lithium is inevitably lost, resulting in a low lithium recovery rate. In traditional pyrometallurgical recovery, lithium remains in the flue dust and requires collection and secondary processing. Traditional hydrometallurgical and pyrometallurgical processes also exhibit low recovery efficiency for other valuable metals. CN 108832215A discloses a method for selectively recovering cathode materials from lithium-ion batteries, which belongs to a typical combined hydrometallurgical-pyrometallurgical recycling process. In this patent, sulfuric acid or a sulfate is uniformly mixed with the cathode material of a lithium battery, followed by roasting and water leaching. Lithium is transferred into the aqueous solution in a form of water-soluble lithium sulfate, while most metal elements, such as nickel and cobalt, remain in the residue phase as water-insoluble oxides, thereby enabling selective extraction of lithium.

CN 117416973A discloses a selective lithium extraction process for lithium manganese iron phosphate batteries. The cathode powder of spent LiMn₁₋ₓFeₓPO₄ batteries is acidified with sulfuric acid, then crushed, roasted, and water-washed to obtain a Li-rich solution. The Li-rich solution is subjected to impurity removal by pH adjustment with a LiOH solution, then the purified solution after impurity removal is supplemented with sulfur, and finally the sulfur-supplemented solution is subjected to evaporation and crystallization to obtain Li₂SO₄. The advantages of this patent include a high lithium recovery rate, but the process is lengthy and involves repeated pH value adjustments and secondary acid addition, consuming large amounts of acid and alkali reagents.

In the recovery methods of lithium battery black mass disclosed in the prior art, a part of elements including nickel, cobalt, manganese, and iron form water-soluble nickel sulfate, cobalt sulfate, or ferrous sulfate, which will co-dissolve with lithium into the water leaching solution, requiring further impurity removal to eliminate them. This portion of valuable metals exists in a form of solid waste, leading to losses.

Therefore, there is an urgent need to develop a method for efficiently recovering valuable metals that applies to various types of lithium battery black mass.

### Summary of the Invention

The objective of the present application is to overcome the deficiencies in the prior art and provide a method for recovering valuable metals from lithium battery black mass.

To achieve the above objective, the present application provides a method for recovering valuable metals from lithium battery black mass, wherein the method comprises the following steps:
(1) adding a sulfur-containing substance and an inhibitor to lithium battery black mass, followed by roasting, water leaching, and filtering, to obtain a first filtrate and a first filter residue; and
(2) preparing a lithium salt from the first filtrate obtained in step (1), and recovering other valuable metals from the first filter residue;

wherein the inhibitor is at least one selected from the group consisting of magnesium oxide, magnesium hydroxide, calcium oxide, calcium hydroxide, aluminum oxide, and aluminum hydroxide;
a molar ratio of other valuable metals in the lithium battery black mass to metal element contained in the inhibitor is 1:0.05-0.5.

With regard to the above-mentioned technical solution, the beneficial technical effects achieved by the present application are as follows:
(1) Through the method provided in the present application, valuable metals in various lithium battery black masses are recovered. While ensuring a high lithium recovery rate (≥98%), other valuable metals are more effectively directed into the slag phase (with a loss rate <2%) for subsequent recovery, thereby improving the recovery rate of these metals.
(2) The present application reduces the amount of sulfur-containing substance(s) added during roasting, enabling efficient lithium recovery.

### Brief Description of the Drawings

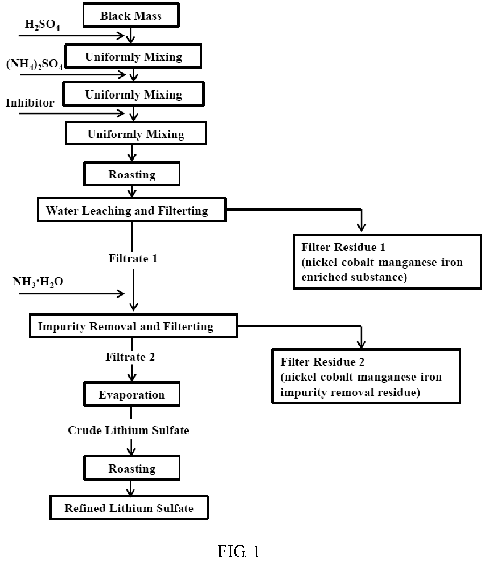

FIG. 1 is a process flow diagram of the present application.

### Detailed Description of the Invention

The endpoints of the ranges and any values disclosed herein are not limited to the exact range or value; such ranges or values should be understood to encompass values approximating these ranges or values. For numerical ranges, the endpoint values of each range, the endpoint values and individual point values, and the individual point values can be combined with each other to generate one or more new numerical ranges, which are considered to be specifically disclosed herein.

A first aspect of the present application provides a method for recovering valuable metals from lithium battery black mass, wherein the method comprises the following steps:
(1) adding a sulfur-containing substance and an inhibitor to lithium battery black mass, followed by roasting, water leaching, and filtering, to obtain a first filtrate and a first filter residue; and
(2) preparing a lithium salt from the first filtrate obtained in step (1), and recovering other valuable metals from the first filter residue;

wherein the inhibitor is at least one selected from the group consisting of magnesium oxide, magnesium hydroxide, calcium oxide, calcium hydroxide, aluminum oxide, and aluminum hydroxide;
a molar ratio of other valuable metals in the lithium battery black mass to metal element contained in the inhibitor is 1:0.05-0.5.

In the prior art, alkaline substances are typically added to the leachate after roasting and leaching to precipitate valuable metals other than lithium as impurities, thereby increasing the purity of the recovered lithium. However, during the impurity removal process, a portion of lithium is inevitably co-precipitated, leading to lithium loss; moreover, this precipitate is typically treated as solid waste (impurity removal slag), resulting in loss of other valuable metals.

Although CN108832215A decomposes most transition metal sulfates (e.g., cobalt sulfate) into metal oxides that enter the solid slag for subsequent recovery by controlling reaction conditions, a portion (about 5-8%) of the transition metal sulfates remains incompletely converted. This residual portion still dissolves into the aqueous solution with lithium during leaching (and is removed during impurity removal, usually without recovery), resulting in loss of valuable metals (e.g., nickel, cobalt, manganese, iron) during solid slag recovery.

In the present application, by adding a specific inhibitor prior to roasting, valuable metals that would otherwise be leached into the leachate (instead of entering the solid slag) remain in an oxide form and do not participate in the leaching process, thereby entering the solid slag and enhancing the efficiency of subsequent valuable metal recovery processes.

In the present application, the amount of the inhibitor is expressed in terms of the metal element it contains. If the amount of the inhibitor added is too small, the loss of other valuable metals is significant; if too much inhibitor is added, it is detrimental to the subsequent recovery of other valuable metals from the first filter residue.

In some embodiments of the present application, the lithium battery black mass is at least one selected from the group consisting of ternary lithium battery (NCM) black mass, lithium cobalt oxide battery (LCO) black mass, lithium nickel oxide battery (LNO) black mass, lithium manganese oxide battery (LMO) black mass, lithium iron phosphate battery (LFP) black mass, and lithium manganese iron phosphate battery (LMFP) black mass. The method of the present application is effective not only for a single type of lithium battery black mass, but also for mixtures of different types of lithium battery black masses.

The "black mass" referred to in the present application may be cathode black mass or mixed cathode and anode black mass.

In some embodiments of the present application, the sulfur-containing substance is at least one selected from the group consisting of sulfuric acid, ammonium sulfate, nickel sulfate, nickel sulfite, cobalt sulfate, cobalt sulfite, manganese sulfate, manganese sulfite, sodium sulfate, sodium sulfite, potassium sulfate, potassium sulfite, copper sulfate, copper sulfite, and ferrous sulfate.

In some embodiments of the present application, the inhibitor is at least one selected from the group consisting of magnesium oxide, aluminum oxide, and calcium hydroxide.

In some embodiments of the present application, the other valuable metals are at least one selected from the group consisting of nickel, cobalt, manganese, and iron.

In some embodiments of the present application, the molar ratio of the other valuable metals in the lithium battery black mass to the metal element contained in the inhibitor is 1:0.05-0.2, preferably 1:0.05-0.1. In some embodiments of the present application, when the lithium battery black mass comprises a first black mass and a second black mass, the sulfur-containing substance comprises at least one of sulfuric acid, copper sulfate, and ferrous sulfate, and ammonium sulfate; wherein the first black mass is at least one of ternary lithium battery black mass, lithium cobalt oxide battery black mass, lithium nickel oxide battery black mass, and lithium manganese oxide battery black mass, and the second black mass is at least one of lithium iron phosphate battery black mass and lithium manganese iron phosphate battery black mass.

In the present application, sulfuric acid is used to recover valuable metals from the first black mass, and ammonium sulfate is used to recover valuable metals from the second black mass, which can reduce the amount of the sulfur-containing substance used and achieve efficient lithium extraction.

In actual operation, if the contents of the compounds (lithium nickel cobalt manganese oxide, lithium cobalt oxide, lithium nickel oxide, lithium manganese oxide) in the first black mass and the compounds (lithium iron phosphate, lithium manganese iron phosphate) in the second black mass in the mixed black mass are unknown, they can be calculated by detecting the contents of the respective valuable metals.

In some embodiments of the present application, the mass concentration of sulfuric acid is 70-100%, preferably 80-98%.

In some embodiments of the present application, the average particle size of ammonium sulfate is 74-245 µm, preferably 83-165 µm.

In some embodiments of the present application, a molar ratio of lithium in the first black mass to the total sulfur content in at least one of sulfuric acid, copper sulfate, and ferrous sulfate is 1:0.5-1, preferably 1:0.52-0.6, more preferably 1:0.55-0.6. In the present application, if the total sulfur content in at least one of sulfuric acid, copper sulfate, and ferrous sulfate is excessive, more nickel, cobalt, manganese, and iron will be leached during water leaching, resulting in greater loss of other valuable metals; if the total sulfur content is insufficient, the reaction is incomplete, and the lithium leaching rate will be low.

In some embodiments of the present application, a molar ratio of lithium in the second black mass to ammonium sulfate is 1:0.55-1, preferably 1:0.55-0.65, more preferably 1:0.55-0.6. In the present application, if the amount of ammonium sulfate is excessive, a small portion of the excess ammonium sulfate may react with the first black mass, causing nickel, cobalt, manganese, and iron to form sulfates, leading to increased leaching and greater losses; if the amount of ammonium sulfate is insufficient, the reaction is incomplete, and the lithium leaching rate will be low.

In some embodiments of the present application, the roasting comprises primary roasting and/or secondary roasting.

In some embodiments of the present application, a temperature of the primary roasting is 280-350°C, preferably 280-300°C.

In some embodiments of the present application, the primary roasting time is 0.5-4 h, preferably 1-2 h.

In some embodiments of the present application, a temperature of the secondary roasting is 500-800°C, preferably 550-700°C.

In some embodiments of the present application, the secondary roasting time is 1-12 h, preferably 3-4 h.

When the lithium battery black mass consists solely of the first black mass, sulfuric acid is used as the sulfur-containing substance, and only the secondary roasting conditions described above are applied for roasting; when the lithium battery black mass consists solely of the second black mass, ammonium sulfate is used as the sulfur-containing substance, and roasting is performed under only the primary roasting conditions described above.

When the lithium battery black mass comprises both the first black mass and the second black mass; wherein, the first black mass is at least one of ternary lithium battery black mass, lithium cobalt oxide battery black mass, lithium nickel oxide battery black mass, and lithium manganese oxide battery black mass, and the second black mass is at least one of lithium iron phosphate battery black mass and lithium manganese iron phosphate battery black mass, roasting is sequentially carried out under conditions of primary roasting and secondary roasting.

In the present application, by further defining the conditions of primary roasting and secondary roasting, a higher lithium recovery rate can be achieved using a smaller amount of a sulfur-containing substance, and the amount of other valuable metals enriched in the first filter residue can also be affected.

When the lithium battery black mass consists solely of the first black mass, sulfuric acid is used as the sulfur-containing substance, and only the secondary roasting conditions described above are applied for roasting; when the lithium battery black mass consists solely of the second black mass, ammonium sulfate is used as the sulfur-containing substance, and roasting is performed under only the primary roasting conditions described above.

In some embodiments of the present application, a liquid-to-solid ratio of water leaching is 1.5-10:1, preferably 2-4:1.

In some embodiments of the present application, the water leaching time is 0.5-12 h, preferably 1-4 h.

In some embodiments of the present application, ammonia water is added to the first filtrate to obtain a second filtrate and a second filter residue. Ammonia water is added to remove the metal element from the inhibitor added.

In some embodiments of the present application, a concentration of ammonia water is 5-30%, preferably 15-25%.

In some embodiments of the present application, ammonia water is added to the first filtrate until the pH is greater than 11.

In some embodiments of the present application, the second filtrate is subjected to evaporation and roasting to obtain refined lithium sulfate. Crude lithium sulfate is obtained after evaporation, and then purified to obtain refined lithium sulfate by roasting.

In some embodiments of the present application, the roasting temperature is 500-600°C, preferably 550°C.

The present application will be described in more detail below by means of examples.

In the following examples and comparative examples, unless otherwise specified, the procedures were carried out under conventional conditions or conditions recommended by the manufacturer. Reagents or instruments not specified with a manufacturer are conventional products available commercially.

In the following examples and comparative examples, the compound in the first black mass is LiNiₓCo_{y}Mn_{z}O₂ (x + y + z = 1, hereinafter referred to as the first compound), and the compound in the second black mass is LiFePO₄ or LiMnₐFe_{b}PO₄ (a + b = 1, hereinafter referred to as the second compound).

### Example 1

This example illustrates a method for recovering valuable metals when the lithium battery black mass is a mixture of a first black mass and a second black mass. As shown in FIG. 1.

After testing, the contents of valuable metals in the black mass used in this example were as follows:

**Table 1.1 Contents of valuable metals in black mass**

| Element | Li | Ni | Co | Mn | Fe |
|---|---|---|---|---|---|
| Content /wt% | 3.89 | 12.62 | 11.09 | 5.17 | 4.48 |

It was calculated that the content of the first compound in the black mass was 77% (relative to the cathode material), and the content of the second compound was 23% (relative to the cathode material).
(1) Sulfuric acid, ammonium sulfate, and magnesium oxide were added to the lithium battery black mass and mixed uniformly; the molar ratio of lithium in the first compound to sulfuric acid was 1:0.55, the concentration of sulfuric acid was 98%; the molar ratio of lithium in the second compound to ammonium sulfate was 1:0.55, the average particle size of ammonium sulfate was 165 µm; the molar ratio of the total amount of nickel, cobalt, manganese, and iron in the black mass to the magnesium element in magnesium oxide was 1:0.05;
(2) the black mass mixed with sulfuric acid, ammonium sulfate, and magnesium oxide was subjected to primary roasting at 280°C for 1 h to obtain a primary roasted black mass;
(3) the primary roasted black mass was subjected to secondary roasting at 600°C for 3 h to obtain a secondary roasted black mass;
(4) water was added to the secondary roasted black mass at room temperature, stirred for leaching, and filtered to obtain filtrate 1 and filter residue 1; filter residue 1 was a nickel-cobalt-manganese-iron enriched substance, which can be used for subsequent recovery of nickel, cobalt, manganese, and iron; the leaching liquid-to-solid ratio was 4:1, the leaching time was 1 h; the leaching rates of elements in filtrate 1 were shown in Table 1.2:

**Table 1.2 Elemental leaching rates**

| Element | Li | Ni | Co | Mn | Fe |
|---|---|---|---|---|---|
| Leaching rate/% | 99.2 | 0.22 | 0.41 | 0.84 | 0.33 |

(5) ammonia water (concentration: 20%) was added to filtrate 1, stirred, and stopped when pH>11 and no longer changed, and the mixture was filtered to obtain filtrate 2 and filter residue 2; filter residue 2 was an impurity removal residue;
(6) filtrate 2 was evaporated to obtain crude lithium sulfate crystals containing ammonium sulfate; and
(7) the crude lithium sulfate crystals were roasted at 550°C to remove ammonium sulfate and crystalline water, to obtain refined lithium sulfate with a purity of 99.7% and a lithium recovery rate of 99.1%.

### Example 2

This example illustrates a method for recovering valuable metals when the lithium battery black mass is a mixture of a first black mass and a second black mass.

After testing, the contents of valuable metals in the black mass used in this example were as follows:

**Table 2.1 Contents of valuable metals in black mass**

| Element | Li | Ni | Co | Mn | Fe |
|---|---|---|---|---|---|
| Content /wt% | 3.42 | 7.70 | 6.77 | 3.16 | 10.32 |

It was calculated that the content of the first compound in the black mass was 47% (relative to the cathode material), and the content of the second compound was 53% (relative to the cathode material).
(1) Sulfuric acid, ammonium sulfate, and magnesium oxide were added to the lithium battery black mass and mixed uniformly; the molar ratio of lithium in the first compound to sulfuric acid was 1:0.6, the concentration of sulfuric acid was 80%; the molar ratio of lithium in the second compound to ammonium sulfate was 1:0.55, the average particle size of ammonium sulfate was 198 µm; the molar ratio of the total amount of nickel, cobalt, manganese, and iron in the black mass to the magnesium element in magnesium oxide was 1:0.1;
(2) the black mass mixed with sulfuric acid, ammonium sulfate, and magnesium oxide was subjected to primary roasting at 300°C for 2 h to obtain a primary roasted black mass;
(3) the primary roasted black mass was subjected to secondary roasting at 570°C for 3 h to obtain a secondary roasted black mass;
(4) water was added to the secondary roasted black mass at room temperature, stirred for leaching, and filtered to obtain filtrate 1 and filter residue 1; filter residue 1 was a nickel-cobalt-manganese-iron enriched substance, which can be used for subsequent recovery of nickel, cobalt, manganese, and iron; the leaching liquid-to-solid ratio was 2:1, the leaching time was 2 h; the leaching rates of elements in filtrate 1 were shown in Table 2.2:

**Table 2.2 Elemental leaching rates**

| Element | Li | Ni | Co | Mn | Fe |
|---|---|---|---|---|---|
| Leaching rate/% | 98.8 | 0.19 | 0.23 | 0.62 | 0.41 |

(5) ammonia water (concentration: 15%) was added to filtrate 1, stirred, and stopped when pH>11 and no longer changed, and the mixture was filtered to obtain filtrate 2 and filter residue 2; filter residue 2 was an impurity removal residue;
(6) filtrate 2 was evaporated to obtain crude lithium sulfate crystals containing ammonium sulfate; and
(7) the crude lithium sulfate crystals were roasted at 550°C to remove ammonium sulfate and crystalline water, to obtain refined lithium sulfate with a purity of 99.6% and a lithium recovery rate of 98.5%.

### Example 3

This example illustrates a method for recovering valuable metals when the lithium battery black mass is a mixture of a first black mass and a second black mass.

After testing, the contents of valuable metals in the black mass used in this example were as follows:

**Table 3.1 Contents of valuable metals in black mass**

| Element | Li | Ni | Co | Mn | Fe |
|---|---|---|---|---|---|
| Content /wt% | 2.91 | 2.29 | 2.01 | 0.94 | 16.74 |

It was calculated that the content of the first compound in the black mass was 14% (relative to the cathode material), and the content of the second compound was 86% (relative to the cathode material).
(1) Sulfuric acid, ammonium sulfate, and magnesium oxide were added to the lithium battery black mass and mixed uniformly; the molar ratio of lithium in the first compound to sulfuric acid was 1:0.52, the concentration of sulfuric acid was 90%; the molar ratio of lithium in the second compound to ammonium sulfate was 1:0.6, the average particle size of ammonium sulfate was 150 µm; the molar ratio of the total amount of nickel, cobalt, manganese, and iron in the black mass to the magnesium element in magnesium oxide was 1:0.5;
(2) the black mass mixed with sulfuric acid, ammonium sulfate, and magnesium oxide was subjected to primary roasting at 290°C for 2 h to obtain a primary roasted black mass;
(3) the primary roasted black mass was subjected to secondary roasting at 550°C for 3 h to obtain a secondary roasted black mass;
(4) water was added to the secondary roasted black mass at room temperature, stirred for leaching, and filtered to obtain filtrate 1 and filter residue 1; filter residue 1 was a nickel-cobalt-manganese-iron enriched substance, which can be used for subsequent recovery of nickel, cobalt, manganese, and iron; the leaching liquid-to-solid ratio was 3:1, the leaching time was 1 h; the leaching rates of elements in filtrate 1 were shown in Table 3.2:

**Table 3.2 Elemental leaching rates**

| Element | Li | Ni | Co | Mn | Fe |
|---|---|---|---|---|---|
| Leaching rate/% | 98.6 | 0.14 | 0.17 | 0.42 | 0.63 |

(5) ammonia water (concentration: 20%) was added to filtrate 1, stirred, and stopped when pH>11 and no longer changed, and the mixture was filtered to obtain filtrate 2 and filter residue 2; filter residue 2 was an impurity removal residue;
(6) filtrate 2 was evaporated to obtain crude lithium sulfate crystals containing ammonium sulfate; and
(7) the crude lithium sulfate crystals were roasted at 550°C to remove ammonium sulfate and crystalline water, to obtain refined lithium sulfate with a purity of 99.6% and a lithium recovery rate of 98.3%.

### Example 4

This example illustrates a method for recovering valuable metals when the lithium battery black mass is a first black mass.

After testing, the contents of valuable metals in the black mass used in this example were as follows:

**Table 4.1 Contents of valuable metals in black mass**

| Element | Li | Ni | Co | Mn |
|---|---|---|---|---|
| Content /wt% | 3.76 | 28.50 | 3.08 | 2.45 |

(1) sulfuric acid and magnesium oxide were added to the lithium battery black mass and mixed uniformly; the molar ratio of lithium in the first compound to sulfuric acid was 1:0.52, the concentration of sulfuric acid was 98%; the molar ratio of the total amount of nickel, cobalt, and manganese in the black mass to the magnesium element in magnesium oxide was 1:0.05;
(2) the black mass mixed with sulfuric acid and magnesium oxide was roasted at 600°C for 3 h to obtain roasted black mass;
(3) water was added to the roasted black mass at room temperature, stirred, leached, and filtered to obtain filtrate 1 and filter residue 1; filter residue 1 was a nickel-cobalt-manganese enriched substance, which can be used for subsequent recovery of nickel, cobalt, and manganese; the leaching liquid-to-solid ratio was 4:1, the leaching time was 1 h; the leaching rates of elements in filtrate 1 were shown in Table 4.2:

**Table 4.2 Elemental leaching rates**

| Element | Li | Ni | Co | Mn |
|---|---|---|---|---|
| Leaching rate/% | 99.2 | 0.21 | 0.39 | 0.92 |

(4) ammonia water (concentration: 20%) was added to filtrate 1, stirred, and stopped when pH>11 and no longer changed, and the mixture was filtered to obtain filtrate 2 and filter residue 2; filter residue 2 was an impurity removal residue;
(5) filtrate 2 was evaporated to obtain crude lithium sulfate crystals containing ammonium sulfate;
(6) the crude lithium sulfate crystals were roasted at 550°C to remove ammonium sulfate and crystalline water, to obtain refined lithium sulfate with a purity of 99.7% and a lithium recovery rate of 99.1%.

### Example 5

This example illustrates a method for recovering valuable metals when the lithium battery black mass is a second black mass.

After testing, the contents of valuable metals in the black mass used in this example were as follows:

**Table 5.1 Contents of valuable metals in black mass**

| Element | Li | Fe | Mn |
|---|---|---|---|
| Content /wt% | 3.03 | 19.97 | 6.2 |

(1) ammonium sulfate and magnesium oxide were added to the lithium battery black mass and mix uniformly; the molar ratio of lithium in the second compound to ammonium sulfate was 1:0.65, the average particle size of ammonium sulfate was 165 µm; the molar ratio of the total amount of manganese and iron in the black mass to the magnesium element in magnesium oxide was 1:0.05;
(2) the black mass mixed with ammonium sulfate and magnesium oxide was roasted at 280°C for 1 h to obtain roasted black mass;
(3) water was added to the roasted black mass at room temperature, stirred, leached, and filtered to obtain filtrate 1 and filter residue 1; filter residue 1 was a nickel-cobalt-manganese-iron enriched substance, which can be used for subsequent recovery of nickel, cobalt, manganese, and iron; the leaching liquid-to-solid ratio was 4:1, the leaching time was 1 h; the leaching rates of elements in filtrate 1 were shown in Table 5.2:

**Table 5.2 Elemental leaching rate**

| Element | Li | Mn | Fe |
|---|---|---|---|
| Leaching rate/% | 99.4 | 0.57 | 0.13 |

(4) ammonia water (concentration: 20%) was added to filtrate 1, stirred, and stopped when pH>11 and no longer changed, and the mixture was filtered to obtain filtrate 2 and filter residue 2; filter residue 2 was an impurity removal residue;
(5) filtrate 2 was evaporated to obtain crude lithium sulfate crystals containing ammonium sulfate;
(6) the crude lithium sulfate crystals were roasted at 550°C to remove ammonium sulfate and crystalline water, to obtain refined lithium sulfate with a purity of 99.7% and a lithium recovery rate of 99.1%.

### Example 6

Valuable metals were recovered according to the method of Example 1, excepting that the molar ratio of the total amount of nickel, cobalt, manganese, and iron in the black mass to the magnesium element in magnesium oxide is 1:0.04, and the leaching rates of elements in filtrate 1 were shown in Table 6.1:

**Table 6.1 Elemental leaching rates**

| Element | Li | Ni | Co | Mn | Fe |
|---|---|---|---|---|---|
| Leaching rate/% | 99.2 | 1.4 | 2.3 | 3.2 | 1.1 |

The obtained refined lithium sulfate had a purity of 99.6% and a lithium recovery rate of 96.3%.

### Example 7

Valuable metals were recovered according to the method of Example 1, excepting that the molar ratio of the total amount of nickel, cobalt, manganese, and iron in the black mass to the magnesium element in magnesium oxide is 1:0.6, and the leaching rates of element in filtrate 1 were shown in Table 7.1:

**Table 7.1 Elemental leaching rates**

| Element | Li | Ni | Co | Mn | Fe |
|---|---|---|---|---|---|
| Leaching rate/% | 99.1 | 0.21 | 0.42 | 0.83 | 0.33 |

The obtained refined lithium sulfate had a purity of 99.5% and a lithium recovery rate of 98.5%.

### Example 8

Valuable metals were recovered according to the method of Example 2, excepting that the molar ratio of lithium in the first compound to sulfuric acid was 1:0.5, and the leaching rates of elements in filtrate 1 were shown in Table 8.1:

**Table 8.1 Elemental leaching rates**

| Element | Li | Ni | Co | Mn | Fe |
|---|---|---|---|---|---|
| Leaching rate/% | 98.7 | 0.17 | 0.24 | 0.64 | 0.39 |

The obtained refined lithium sulfate had a purity of 99.7% and a lithium recovery rate of 98.6%.

### Example 9

Valuable metals were recovered according to the method of Example 2, excepting that the molar ratio of lithium in the first compound to sulfuric acid was 1:1, and the leaching rates of elements in filtrate 1 were shown in Table 9.1:

**Table 9.1 Elemental leaching rates**

| Element | Li | Ni | Co | Mn | Fe |
|---|---|---|---|---|---|
| Leaching rate/% | 98.9 | 0.19 | 0.21 | 0.70 | 0.42 |

The obtained refined lithium sulfate had a purity of 99.6% and a lithium recovery rate of 98.8%.

### Example 10

Valuable metals were recovered according to the method of Example 2, excepting that the molar ratio of lithium in the first compound to sulfuric acid was 1:0.4, and the leaching rates of elements in filtrate 1 were shown in Table 10.1:

**Table 10.1 Elemental leaching rates**

| Element | Li | Ni | Co | Mn | Fe |
|---|---|---|---|---|---|
| Leaching rate/% | 83.1 | 0.17 | 0.19 | 0.45 | 0.40 |

The obtained refined lithium sulfate had a purity of 99.7% and a lithium recovery rate of 82.4%.

### Example 11

Valuable metals were recovered according to the method of Example 2, excepting that the molar ratio of lithium in the first compound to sulfuric acid was 1:1.1, and the leaching rates of elements in filtrate 1 were shown in Table 11.1:

**Table 11.1 Elemental leaching rates**

| Element | Li | Ni | Co | Mn | Fe |
|---|---|---|---|---|---|
| Leaching rate/% | 98.9 | 0.57 | 1.06 | 2.11 | 0.42 |

The obtained refined lithium sulfate had a purity of 99.6% and a lithium recovery rate of 98.0%.

### Example 12

Valuable metals were recovered according to the method of Example 2, excepting that the molar ratio of lithium in the second compound to ammonium sulfate was 1:1, and the leaching rates of elements in filtrate 1 were shown in Table 12.1:

**Table 12.1 Elemental leaching rates**

| Element | Li | Ni | Co | Mn | Fe |
|---|---|---|---|---|---|
| Leaching rate/% | 99.0 | 0.17 | 0.26 | 0.61 | 0.52 |

The obtained refined lithium sulfate had a purity of 99.8% and a lithium recovery rate of 98.8%.

### Example 13

Valuable metals were recovered according to the method of Example 2, excepting that the molar ratio of lithium in the second compound to ammonium sulfate was 1:0.3, and the leaching rates of elements in filtrate 1 were shown in Table 13.1:

**Table 13.1 Elemental leaching rates**

| Element | Li | Ni | Co | Mn | Fe |
|---|---|---|---|---|---|
| Leaching rate/% | 87.5 | 0.18 | 0.23 | 0.63 | 0.17 |

The obtained refined lithium sulfate had a purity of 99.6% and a lithium recovery rate of 86.9%.

### Example 14

Valuable metals were recovered according to the method of Example 2, excepting that the molar ratio of lithium in the second compound to ammonium sulfate was 1:1.2, and the leaching rates of elements in filtrate 1 were shown in Table 14.1:

**Table 14.1 Elemental leaching rates**

| Element | Li | Ni | Co | Mn | Fe |
|---|---|---|---|---|---|
| Leaching rate/% | 98.8 | 0.44 | 0.63 | 1.21 | 6.23 |

The obtained refined lithium sulfate had a purity of 99.7% and a lithium recovery rate of 96.8%.

### Example 15

Valuable metals were recovered according to the method of Example 3, excepting that the primary roasting temperature was 260°C.

The leaching rates of elements in filtrate 1 were shown in Table 15.1:

**Table 15.1 Elemental leaching rates**

| Element | Li | Ni | Co | Mn | Fe |
|---|---|---|---|---|---|
| Leaching rate/% | 83.4 | 0.32 | 0.29 | 0.99 | 0.54 |

The obtained refined lithium sulfate had a purity of 99.7% and a lithium recovery rate of 82.7%.

### Example 16

Valuable metals were recovered according to the method of Example 3, excepting that the primary roasting temperature was 360°C.

The leaching rates of elements in filtrate 1 were shown in Table 16.1:

**Table 16.1 Elemental leaching rates**

| Element | Li | Ni | Co | Mn | Fe |
|---|---|---|---|---|---|
| Leaching rate/% | 92.8 | 0.15 | 0.16 | 0.44 | 0.44 |

The obtained refined lithium sulfate had a purity of 99.7% and a lithium recovery rate of 92.3%.

### Example 17

Valuable metals were recovered according to the method of Example 3, excepting that the secondary roasting temperature was 480°C.

The leaching rates of elements in filtrate 1 were shown in Table 17.1:

**Table 17.1 Elemental leaching rates**

| Element | Li | Ni | Co | Mn | Fe |
|---|---|---|---|---|---|
| Leaching rate/% | 64.8 | 0.07 | 0.09 | 0.10 | 0.59 |

The obtained refined lithium sulfate had a purity of 99.6% and a lithium recovery rate of 64.3%.

### Example 18

Valuable metals were recovered according to the method of Example 3, excepting that the secondary roasting temperature was 850°C. The leaching rates of elements in the obtained filtrate 1 were shown in Table 18.1:

**Table 18.1 Elemental leaching rates**

| Element | Li | Ni | Co | Mn | Fe |
|---|---|---|---|---|---|
| Leaching rate/% | 78.8 | 0.02 | 0.01 | 0.02 | 0.34 |

The obtained refined lithium sulfate had a purity of 99.7% and a lithium recovery rate of 78.2%.

### Example 19

Valuable metals were recovered according to the method of Example 1, excepting that sulfuric acid was replaced with an equimolar amount of ammonium sulfate, and the leaching rates of elements in the obtained filtrate 1 were shown in Table 19.1:

**Table 19.1 Elemental leaching rates**

| Element | Li | Ni | Co | Mn | Fe |
|---|---|---|---|---|---|
| Leaching rate/% | 82.7 | 2.5 | 2.1 | 3.2 | 0.32 |

Refined lithium sulfate was obtained with a purity of 99.7% and a lithium recovery rate of 82.1%.

### Example 20

Valuable metals were recovered according to the method of Example 1, excepting that ammonium sulfate was replaced with an equimolar amount of sulfuric acid, and the leaching rates of elements in the obtained filtrate 1 were shown in Table 20.1:

**Table 20.1 Elemental leaching rates**

| Element | Li | Ni | Co | Mn | Fe |
|---|---|---|---|---|---|
| Leaching rate/% | 83.4 | 1.32 | 3.47 | 6.22 | 0.13 |

Refined lithium sulfate was obtained with a purity of 99.6% and a lithium recovery rate of 82.9%.

### Example 21

Valuable metals were recovered according to the method of Example 1, excepting that magnesium oxide was replaced with an equimolar amount (based on metal element) of calcium hydroxide, and the leaching rates of elements in the obtained filtrate 1 were shown in Table 21.1:

**Table 21.1 Elemental leaching rates**

| Element | Li | Ni | Co | Mn | Fe |
|---|---|---|---|---|---|
| Leaching rate/% | 99.3 | 0.18 | 0.43 | 0.86 | 0.32 |

Refined lithium sulfate was obtained with a purity of 99.7% and a lithium recovery rate of 99.2%. Calcium hydroxide inhibited the leaching of nickel, cobalt, manganese, and iron, thereby transferring them into filter residue 1.

### Example 22

Valuable metals were recovered according to the method of Example 1, excepting that magnesium oxide was replaced with an equimolar amount (based on metal element) of aluminum oxide, and the leaching rates of elements in the obtained filtrate 1 were shown in Table 22.1:

**Table 22.1 Elemental leaching rates**

| Element | Li | Ni | Co | Mn | Fe |
|---|---|---|---|---|---|
| Leaching rate/% | 99.1 | 0.21 | 0.46 | 0.73 | 0.35 |

Refined lithium sulfate was obtained with a purity of 99.5% and a lithium recovery rate of 99.1%. Aluminum oxide inhibited the leaching of nickel, cobalt, manganese, and iron, thereby transferring them into filter residue 1.

### Comparative Example 1

Valuable metals were recovered according to the method of Example 1, excepting that magnesium oxide was not added. The leaching rates of elements in filtrate 1 obtained in step (4) were shown in Table 1-1:

**Table 1-1 Elemental leaching rates**

| Element | Li | Ni | Co | Mn | Fe |
|---|---|---|---|---|---|
| Leaching rate/% | 99.3 | 2.7 | 4.2 | 11.2 | 4.1 |

As can be seen from a comparison of Table 1-1 with Table 1.2, the leaching rates of nickel, cobalt, manganese, and iron are higher, indicating that less nickel, cobalt, manganese, and iron enter the filter residue 1 for subsequent recovery, resulting in losses of nickel, cobalt, manganese, and iron.

### Comparative Example 2

Valuable metals were recovered according to the method of Example 2, excepting that magnesium oxide was replaced with an equimolar amount (based on metal element) of Ga₂O₃; the leaching rates of elements in filtrate 1 were shown in Table 2-1:

**Table 2-1 Elemental leaching rates**

| Element | Li | Ni | Co | Mn | Fe |
|---|---|---|---|---|---|
| Leaching rate/% | 98.9 | 2.2 | 3.2 | 3.4 | 2.4 |

Ga₂O₃ exhibited a poor inhibition effect on nickel, cobalt, manganese, and iron, leading to significant losses of nickel, cobalt, manganese, and iron.

### Comparative Example 3

Valuable metals were recovered according to the method of Example 2, excepting that magnesium oxide was replaced with an equimolar amount (based on metal element) of CaCO₃; the leaching rates of elements in filtrate 1 were shown in Table 3-1:

**Table 3-1 Elemental leaching rates**

| Element | Li | Ni | Co | Mn | Fe |
|---|---|---|---|---|---|
| Leaching rate/% | 98.6 | 2.4 | 3.3 | 3.2 | 2.1 |

CaCO₃ exhibited a poor inhibition effect on nickel, cobalt, manganese, and iron, leading to significant losses of nickel, cobalt, manganese, and iron.

The preferred embodiments of the present application have been described in detail above, but the present application is not limited thereto. Within the technical concept of the present application, various simple modifications may be made to the technical solutions of the present application, including combinations of the technical features in any other suitable manner; such simple modifications and combinations shall also be deemed as disclosed in the present application and fall within the protection scope of the present application.

### Industrial applicability

The present application relates to the technical field of lithium batteries and discloses a method for recovering valuable metals from lithium battery black mass. Lithium battery black mass is mixed with a sulfur-containing substance and an inhibitor, followed by roasting, water leaching, and filtering to obtain a first filtrate and a first filter residue; a lithium salt is prepared from the first filtrate, and other valuable metals are recovered from the first filter residue; wherein the inhibitor is at least one selected from the group consisting of magnesium oxide, magnesium hydroxide, calcium oxide, calcium hydroxide, aluminum oxide, and aluminum hydroxide. The method provided by the present application enables the recovery of valuable metals from various types of lithium battery black mass, ensuring a high lithium recovery rate (≥98%) while allowing more other valuable metals to remain in the residue phase (with a loss rate <2%) for subsequent recovery, thereby improving the recovery rates of the other valuable metals.

## Claims

1. A method for recovering valuable metals from lithium battery black mass, wherein the method comprises the following steps:
(1) adding a sulfur-containing substance and an inhibitor to lithium battery black mass, followed by roasting, water leaching, and filtering, to obtain a first filtrate and a first filter residue; and
(2) preparing a lithium salt from the first filtrate obtained in step (1), and recovering other valuable metals from the first filter residue;
wherein the inhibitor is at least one selected from the group consisting of magnesium oxide, magnesium hydroxide, calcium oxide, calcium hydroxide, aluminum oxide, and aluminum hydroxide;
a molar ratio of other valuable metals in the lithium battery black mass to metal element contained in the inhibitor is 1:0.05-0.5.

2. The method according to claim 1, wherein the lithium battery black mass is at least one selected from the group consisting of ternary lithium battery black mass, lithium cobalt oxide battery black mass, lithium nickel oxide battery black mass, lithium manganese oxide battery black mass, lithium iron phosphate battery black mass, and lithium manganese iron phosphate battery black mass;
and/or, the sulfur-containing substance is at least one selected from the group consisting of sulfuric acid, ammonium sulfate, nickel sulfate, nickel sulfite, cobalt sulfate, cobalt sulfite, manganese sulfate, manganese sulfite, sodium sulfate, sodium sulfite, potassium sulfate, potassium sulfite, copper sulfate, copper sulfite, and ferrous sulfate;
and/or, the inhibitor is at least one selected from the group consisting of magnesium oxide, aluminum oxide, and calcium hydroxide;
and/or, the other valuable metals are at least one selected from the group consisting of nickel, cobalt, manganese, and iron.

3. The method according to claim 1, wherein the molar ratio of the other valuable metals in the lithium battery black mass to the metal element contained in the inhibitor is 1:0.05-0.2, or 1:0.05-0.1.

4. The method according to claim 1, wherein when the lithium battery black mass comprises a first black mass and a second black mass, the sulfur-containing substance comprises ammonium sulfate and at least one of sulfuric acid, copper sulfate, and ferrous sulfate; wherein the first black mass is at least one of ternary lithium battery black mass, lithium cobalt oxide battery black mass, lithium nickel oxide battery black mass, and lithium manganese oxide battery black mass, and the second black mass is at least one of lithium iron phosphate battery black mass and lithium manganese iron phosphate battery black mass.

5. The method according to claim 4, wherein the mass concentration of sulfuric acid is 70-100%, or 80-98%;
and/or, the average particle size of ammonium sulfate is 74-245 µm, or 83-165 µm;
and/or, a molar ratio of lithium in the first black mass to the total sulfur content in at least one of sulfuric acid, copper sulfate, and ferrous sulfate is 1:0.5-1, or 1:0.52-0.6, or 1:0.55-0.6;
and/or, a molar ratio of lithium in the second black mass to ammonium sulfate is 1:0.55-1, or 1:0.55-0.65, or 1:0.55-0.6.

6. The method according to claim 1, wherein the roasting comprises primary roasting and/or secondary roasting;
and/or, a temperature of the primary roasting is 280-350°C, or 280-300°C;
and/or, the primary roasting time is 0.5-4 h, or 1-2 h.

7. The method according to claim 6, wherein a temperature of the secondary roasting is 500-800°C, or 550-700°C;
and/or, the secondary roasting time is 1-12 h, or 3-4 h.

8. The method according to claim 1, wherein a liquid-to-solid ratio of water leaching is 1.5-10:1, or 2-4:1;
and/or, the water leaching time is 0.5-12 h, or 1-4 h.

9. The method according to claim 1, wherein ammonia water is added to the first filtrate to obtain a second filtrate and a second filter residue;
and/or, a concentration of ammonia water is 5-30%, or 15-25%;
and/or, ammonia water is added to the first filtrate until the pH is greater than 11.

10. The method according to claim 1, wherein the second filtrate is subjected to evaporation and roasting to obtain refined lithium sulfate;
and/or, the roasting temperature is 500-600°C, or 550°C.
